Europäisches Patentamt

European Patent Office

Office européen des brevets

(11) Publication number: **0 377 265**
**A1**

# (12) EUROPEAN PATENT APPLICATION

(21) Application number: **89300124.8**

(22) Date of filing: **06.01.89**

(51) Int. Cl.5: **F02B 19/10, F02M 21/02,**
**F02D 19/02**

(43) Date of publication of application:
**11.07.90 Bulletin 90/28**

(84) Designated Contracting States:
**DE FR**

(71) Applicant: **YANMAR DIESEL ENGINE CO. LTD.**
**1-32, Chaya-machi Kita-ku**
**Osaka-shi Osaka(JP)**

(72) Inventor: **Nakazono, Touru**
**c/o Yanmar Diesel Engine Co. Ltd. 1-32,**
**Kita-ku**
**Chaya-machi Osaka-shi Osaka(JP)**
Inventor: **Furuta, Takashi**
**c/o Yanmar Diesel Engine Co. Ltd. 1-32**
**Kita-ku**
**Chaya-machi Osaka-shi Osaka(JP)**
Inventor: **Natsme, Yoshihivo**
**c/o Yanmar Diesel Engine Co. Ltd. 1-32,**
**Kita-ku**
**Chaya-machi Osaka-shi Osaka(JP)**

(74) Representative: **Barker, Rosemary Anne et al**
**Barlow, Gillett & Percival 94 Market Street**
**Manchester M1 1PJ(GB)**

(54) **Gas engine.**

(57) The engine includes a pre-combustion chamber (12) in communication with a main combustion chamber (10), an intake passage (14) arranged to supply lean mixture to the main chamber (10), a gas pipe (18) to supply fuel gas to the pre-chamber (12) to form a rich mixture there, and a spark plug (20) to ignite the rich mixture in the pre-chamber (12) prior to combustion of the lean mixture in the main combustion chamber (10). To improve the mixing of fuel gas and air in the pre-chamber (12), at least a portion (42) of the pre-chamber (12) has a cross-sectional area which gradually decreases toward the main combustion chamber. Preferably the pre-chamber (12) inner surface (42) tapers gradually towards the main chamber (10) with the ratio of minimum and maximum diameters (d/D) being approximately 0.3.

FIG.1

## GAS ENGINE

This invention relates to a gas engine of the type which includes a pre-combustion chamber and which is commonly used for driving an electric generator or for a co-generation system.

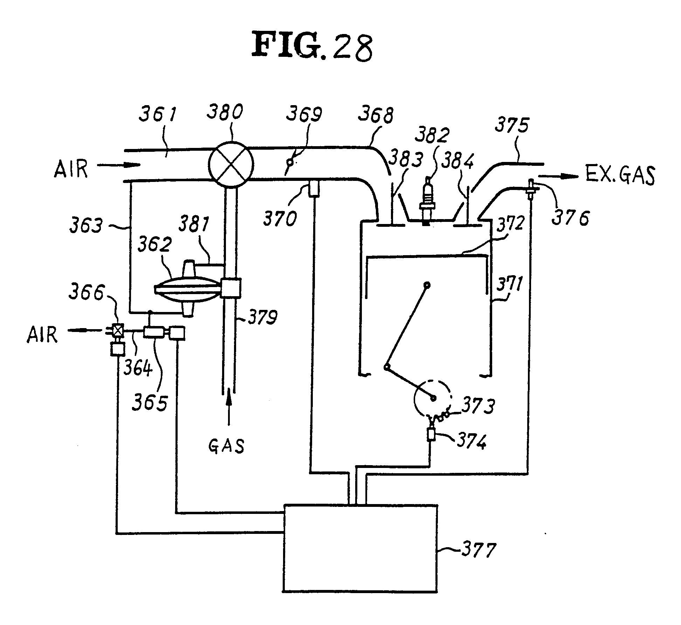

As shown in Figure 25, a conventional gas engine of this type includes a main combustion chamber 10 and a pre-combustion chamber 12 connected thereto. A lean mixture of fuel and air is supplied through an intake part 14, while a rich mixture of fuel and air is formed in the pre-chamber 12 by fuel gas supplied through a gas pipe 18. A spark plug 20 initially ignites the rich mixture in the pre-chamber 12 to cause combustion in the main chamber 10 so as to achieve low fuel consumption and clean exhaust gas.

The engine also includes a gas regulator 15, a throttle valve 16, a mixer 17, an igniter 19, a lubricating oil pipe 21, a pump 23, an intake valve 25, and an exhaust valve 26. The gas pipe 18 is provided with a check valve 24, which is disclosed in Japanese patent specification No. 63-37946 by the applicant. The check valve 24 is opened by negative pressure in the chamber 12 and closed by positive pressure therein (Figure 26).

If the engine as described above is large in size, the mixture flows into the pre-chamber 12 at excessively high velocity, which deteriorates ignitability in the chamber 12, as stated in Japanese Utility publication No. 55-14749.

As shown in Figure 26, the pre-chamber 12 is formed in a body 125 which is screwed into a cylinder head 126 with packing 127 therebetween. The top end of the body 125 is welded to a sleeve 28 in which the plug 20 and the check valve 24 are mounted.

The upper potion of the check valve 24 is located in a first chamber 130 which is connected to the gas pipe 18. The lower portion of the valve 24 is disposed in a second chamber 131 which is connected to the pre-chamber 12. Thus, the check valve 24 controls the flow of gas from the gas pipe 18 into the pre-chamber 12 through the chamber 131.

As shown in Figure 27, the check valve 24 comprises a valve holder 132, a valve guide 133, a valve stem 134 slidably fitted in the guide 133, a valve body 135 and a valve spring 136. The negative pressure applied to the valve body 135 in the intake stroke draws it down away from a valve seat 137 against the elastic force of the spring 136, and thus the valve 24 opens. The upper chamber 130 is formed in a cap 139, and a lower space 138 is formed in the valve guide 133.

In the prior art structures, when the pressure in the chamber 130 decreases it may become difficult to supply gas to the chamber 12.

Further, a difference between the pressures in the spaces 130 and 138 may restrain the opening operation of the valve body 135, and thus cause a delay thereof, which results in unfavourable opening characteristics. Japanese patent publication 62-331 relates to this matter.

In order to maintain an ideal mixture ratio, it is necessary to control and vary the supply pressure of the gas or the mixture to the pre-chamber 12 in accordance with the load and engine speed.

However, there has been no method to effectively control the supply pressure to the pre-chamber.

For gas engines of three-way catalyst type, without a pre-chamber, mixture ratio control apparatus has been disclosed in Japanese laid-open publication No. 61-138840, in which a gas supply pipe and and intake pipe are connected, other than through a mixer, by a bypass passage, the degree of opening of which is controlled by a control device. In this sort of apparatus, however, precise control of the flow rate of the fuel gas in the bypass passage is impossible. Since the volume percentage of the fuel gas in the mixture is remarkably small, even if the gas flow rate changes to a small extent, it causes a relatively large change in the air/fuel ratio. In the catalyst type of engine the mixture is rich and has a volume ratio, e.g., of 11, so that the mixture ratio will not exceed the combustion limit even with such a rough control. However, in the lean mixture combustion type, in which the mixture has a volume ratio of about 22, precise control is required to maintain the ratio within the combustion limit because the flow rate of the gas more rapidly affects the mixture ratio of the lean mixture. Therefore, the known control device cannot be used in the gas engine of lean burn type. Moreover, the known device cannot control the ratio in accordance with the load and engine speed.

Figure 28 illustrates control apparatus previously proposed by the applicants for a lean mixture combustion engine, in which a relief passage 364 is connected to a boost pressure compensation pipe 363, which functions to introduce pressure into an air supply passage 361 to a gas regulator 362. In the relief passage 364, there are provided a flow control valve 365 and a shut-off valve 366, both of which are electronically controlled by a control device 377 receiving signals from a boost sensor 370, a rotation speed sensor 374 and lean-burn sensor 376. The sensor 370 detects pressure downstream of the throttle 369 in an intake pipe 368. The sensor 374 detects teeth of a gear 373 on a crank shaft to produce output pulse signals. The sensor 376 detects residual oxygen concentration in the exhaust gas. In the control device 377, consisting of a micro-computer and associated components, the optimum or ideal mixture ratio in relation to the engine load and speed is pre-memorized as a map. The optimum mixture ratio is read out from the map in accordance with the engine speed and load resulting from the processing of the signals from the sensors 370 and 374. The actual ratio is obtained from the signal from the sensor 376. The control valve 365 is controlled so that the actual ratio may have the ideal value. In the controlling operation, the flow of the air relieved through the passage 364 changes, and thus the air pressure introduced from the passage 363 to the regulator 362 changes, so that the mixture ratio varies to the optimum value.

When acceleration of the engine is required the control unit 377 controls the shut-off valve 366 to close so that the supply gas pressure increases, resulting in a rich mixture.

The arrangement shown in Figure 28 also includes a cylinder 371, a piston 372, a gas supply pipe 379, a mixer 380, a spark plug 382, an intake valve 383, and an exhaust valve 384.

Although the arrangement described above is superior to the previously stated device, it controls the gas supply pressure, so that the change of the degree of opening of the valve 365 causes rapid change in the mixture ratio, and thus sufficiently precise control is still impossible.

A first object of the invention is to provide a gas engine provided with a pre-chamber of such a shape that the formation of the fuel/air mixture in the pre-chamber can be improved.

According to a first aspect of the invention, a gas engine in which a pre-combustion chamber is arranged in communication with a main combustion chamber, an intake passage is arranged to supply lean mixture to the main chamber, a gas pipe is provided to supply fuel gas to the pre-chamber to form a rich mixture there, and a spark plug is adapted to ignite the rich mixture in the main chamber, is characterised in that at least a portion of the pre-chamber has a cross-sectional area which gradually decreases toward the main combustion chamber.

A pre-chamber having the aforesaid shape automatically causes circulatory flow of the mixture in the pre- chamber, which improves formation of the mixture.

A second object of the invention is to provide a check valve device for a gas engine provided with a pre-chamber in which gas is effectively supplied to the pre-chamber even at low gas pressure, and the valve operation characteristics are improved.

According to a second aspect of the invention, a gas engine having a pre-combustion chamber and having a passage for supplying fuel gas to the pre-chamber provided with a check valve adapted to be opened by negative pressure in the pre-chamber, is characterised in that the check valve comprises valve guide means connecting to the pre-chamber, a closed cylindrical cap at the upper end of the valve guide means, a valve stem slidably fitted into the valve guide means and a valve body integral with the valve stem, and in that a connecting passage is provided for connecting a lower space in the valve guide means, which connects to the pre-chamber only when the valve body opens, to an upper space in the cap, the end of the connecting passage which opens into the upper space being spaced from an end of a lubricating oil pipe which also opens to the upper space to supply lubricating oil thereto.

A third object of the invention is to provide a method of controlling the gas pressure in a pre-chamber of a gas engine, in which the supply pressure of gas or mixture to the pre-chamber can be effectively and finely controlled.

According to a third aspect of the invention, a method of controlling gas pressure in a pre-chamber comprises supplying gas or air/gas mixture to the pre-chamber at a pressure Pg in accordance with the following equation:

$$Pg = APa + BPc + C,$$

Pa being an intake negative pressure, Pc being a boost pressure, and A, B and C being constants above 0.

Further, a gas pressure control arrangement for carrying out the said method comprises a regulator for controlling gas pressure provided in a gas supply pipe for the pre-chamber, said regulator including a valve adapted to selectively open and close a gas passage, a first spring member biasing said valve in a closing direction, a main diaphragm connected to the valve through a first rod, an auxiliary diaphragm connected to the main diaphragm through a second rod, a second spring biasing the auxiliary diaphragm in a direction for opening the valve, and a bolt for setting a spring load connected to the second spring, an intake negative pressure being introduced to the main diaphragm so as to act in a closing direction of the valve and a boost pressure being introduced to the auxiliary diaphragm so as to act in the opening direction of the valve.

A fourth object of the invention is to provide mixture ratio control arrangement for a gas engine (with or without a pre-chamber) which can precisely control the air/fuel ratio.

According to a fourth aspect of the invention, such an arrangement comprises a bypass passage connecting the air supply passage to the intake pipe without passing through the mixer, an air flow control

EP 0 377 265 A1

valve for adjusting the degree of opening of the bypass passage, a load sensor for detecting the load of the engine, a rotation speed sensor for detecting the load of the engine, a lean burn sensor for detecting residual oxygen density in exhaust gas of the engine, and a control device for controlling the air flow control valve in accordance with detected output from the aforesaid sensors so that the mixture ratio is optimally controlled in accordance with the load and speed of the engine.

The various aspects of the invention will be described in more detail with reference to the accompanying drawings, in which:

Figure 1 is a sectional view of a major part of a gas engine of pre-chamber type according to a first aspect of the invention;

Figure 2 is a graph of velocity of jet flow against fuel consumption;

Figure 3 is a graph of coefficient Ct against fuel consumption;

Figure 4 is a graph of coefficient Ct against coefficient L/D;

Figure 5 is a sectional view of a first embodiment of a check valve according to a second aspect of the present invention;

Figure 6 is a graph of crank shaft angle against valve lift;

Figure 7 is a graph of gas flow against gas pressure;

Figure 8 is a sectional view of a second embodiment of a check valve according to the second aspect of the invention;

Figure 9 is a sectional view of a third embodiment of a check valve according to the second aspect of the invention;

Figure 10 is a schematic view of a gas engine employing a pre-chamber gas pressure control method in accordance with a third aspect of the invention;

Figure 11 is a sectional view of a regulator for a pre-chamber as shown in Figure 10;

Figure 12 is a graph illustrating the relationship between boost pressure and gas supply pressure to a pre-chamber;

Figure 13 is a graph illustrating the relationship between intake negative pressure and gas supply pressure to a pre-chamber;

Figure 14 is a graph illustrating the relationship between the degree of opening of throttle and gas supply pressure;

Figure 15 is a schematic view of a gas engine incorporating a mixture ratio control arrangement in accordance with a fourth aspect of the invention;

Figure 16 is a diagram of a control device as shown in Figure 15;

Figures 17 and 18 are flow device charts of operations of a control device as shown in Figure 16;

Figure 19 is a table illustrating a map memorized in a control device as shown in Figure 16;

Figure 20 is a graph illustrating the relationship between the degree of opening of an air flow control valve and an excess air ratio;

Figure 21 is a schematic view of another embodiment of gas engine incorporating a mixture ratio control arrangement in accordance with a fourth aspect of the invention;

Figure 22 is a time chart illustrating operations of components in the engine shown in Figure 21;

Figure 23 is a schematic view of a yet another embodiment of gas engine incorporating a mixture ratio control arrangement in accordance with a fourth aspect of the invention;

Figure 24 is a time chart illustrating operations of components in the engine shown in Figure 23;

Figure 25 is a schematic view illustrating a conventional gas engine, as already referred to;

Figure 26 is an enlarged sectional view of the engine in Figure 25;

Figure 27 is a sectional view of a conventional check valve, as already referred to; and

Figure 28 is a schematic view of another conventional gas engine, which has already been referred to.

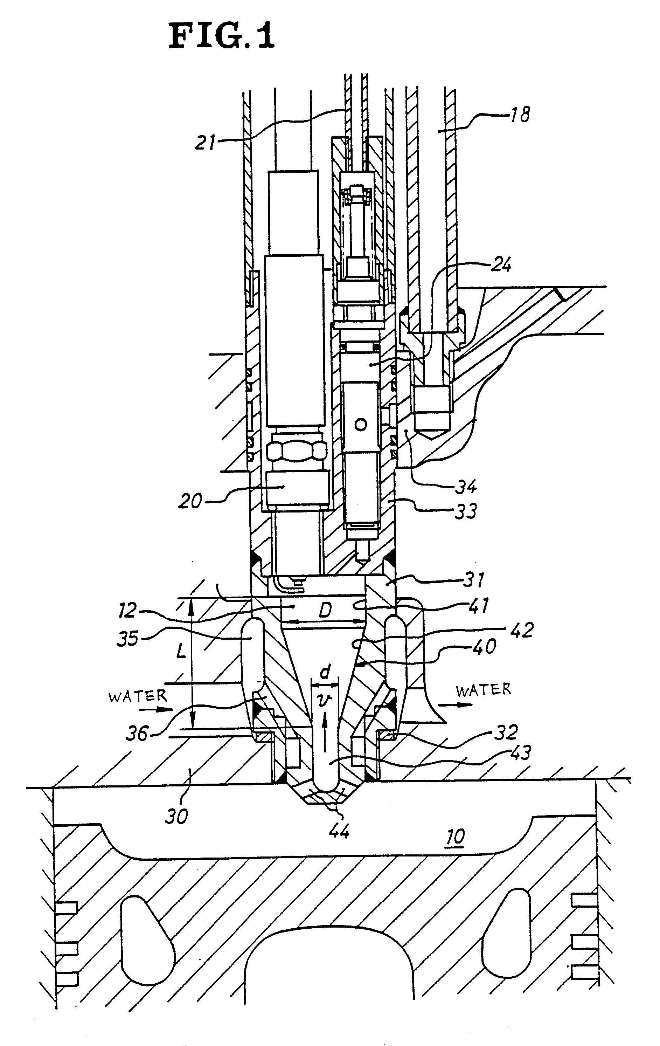

Figure 1 illustrates a gas engine having a pre-combustion chamber, i.e., of pre-chamber type, and having a bore of 100 mm or more. In Figure 1, the same or similar parts and members as those in Figure 25 bear the same reference numerals.

A pre-chamber body 31 is screwed into a cylinder head 30 with packing 32 therebetween. The upper end of the body 31 is welded to a sleeve 33, in which a spark plug 20 and a check valve 24 are arranged. The valve 24 selectively opens and closes a gas passage 18, the lower end 34 of which is in communication with the pre-combustion chamber 12, and is inclined with respect to a centre line of the body 31. A cooling water passage 35 is formed around the body 31 and is connected to a passage 36 therein.

An inner surface 40 of the body 31, defining the chamber 12, has a cylindrical surface portion 41 and a tapered surface portion 42, and thus has a substantially inverted conical shape. The lower end of the space

4

defined by the tapered suface 42 connects to three ports 44 by way of a passage 43 of circular cross-section.

The height or length L of the pre-chamber 12 and the diameters D and d of the larger and smaller ends of the tapered surface 42 have the following relationship:

d/D = 0.3     (1)

L/D = 1.5 ~ 2.0     (2)

The condition (1) is set for thorough mixing of the gas in the pre-chamber 12 and a lean mixture in the main chamber 10 in a compression stroke. The condition (2) is set for thorough mixing of fuel gas and air in the pre-chamber 12 as well as good combustion and ignitability.

The height of the cylindrical surface 41 may be varied, or the cylindrical surface 41 may be eliminated.

In operation of the afore-mentioned embodiment, negative pressure in the main chamber 10 causes the fuel gas to flow into the pre-chamber 12 through the gas pipe 18 in the intake stroke of the engine. In the subsequent compression stroke, the lean mixture in the main chamber 10 is compressed and flows to the pre-chamber 12 through the ports 44 and the passage 43 at a velocity of v (m/s), and thus is mixed with the fuel gas filling the pre-chamber 12.

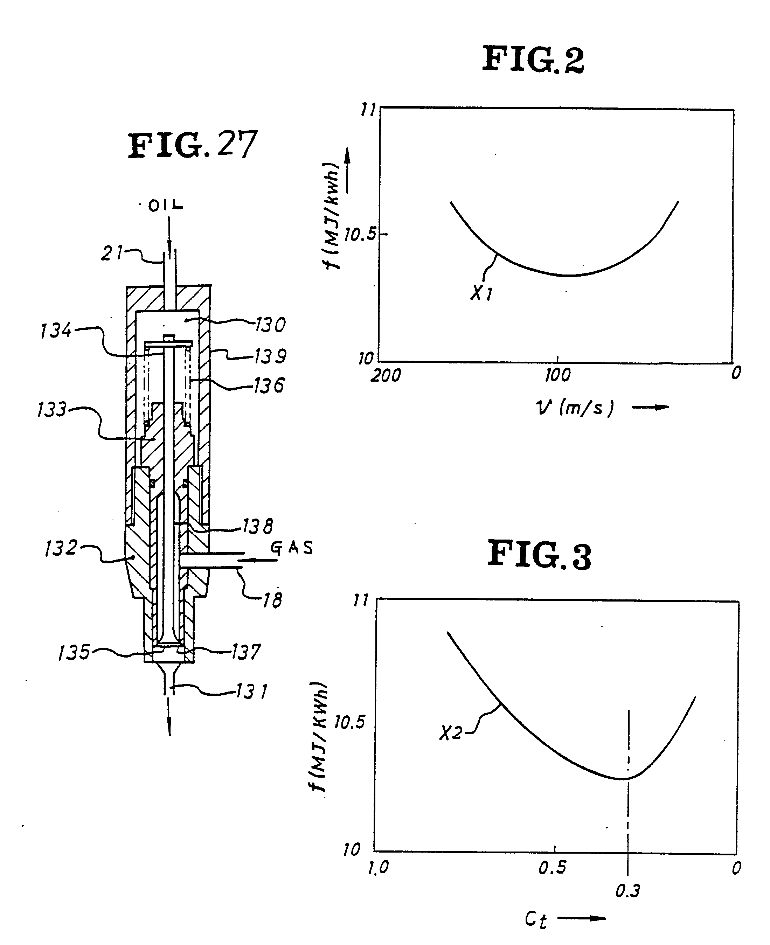

The velocity v affects the combustion condition. As shown in Figure 2 illustrating the relationship between fuel consumption f (MJ/KWh) and the velocity v, if the velocity v is 160 m/s or more, the mixture does not ignite due to blow-off. If the velocity is 30 m/s or less, cyclic variation is very wide and stable driving is impossible. According to the characteristic Z1 in Figure 2, the fuel consumption f is best in the region in which the velocity v is about 90 m/s.

The flow of gas, just described, at velocity v from the passage 43 can be considered as a jet flow. The shape of the inner surface 40 of the pre-chamber 12 has been calculated such that the intended rich mixture may be automatically generated in the pre-chamber 12 by this jet flow, as now described.

First of all, the conditions for forming the intended rich mixture throughout the pre-chamber 12 will be described in connection with the equation (1). According to a reference in "TURBULENT JETS" (N. Rajaratnam, Elservier Scientific Publishing Company, Amsterdam, 1976), the flow rate W of jet flow can be expressed as follows, provided that it flows through a cylindrical passage:

$$\frac{d}{dx} \int_{0}^{R_o} (p + \rho \times u^2)\, r\, dr = 0$$

$$\frac{dW}{dx} = 0$$

x: axial position of the passage

r: radial position

$R_o$: radius of the passage

P: pressure in the passage

p:     density

u:     flow velocity

$$W = \int_{0}^{R_o} (p + \rho \times u^2)\, r\, dr .$$

A non-dimension parameter H is as follows:

$H = \{1/(2\pi)^{1/2}\} \times \{Q/(W/P \times R_o)^{1/2}\}$

$= 1/2(m + 1/2)^{1/2}$

$= 1/2\{1 + 2/Ct^2\}^{1/2}$     (3)

Q: flow rate

$Ct = 1/m^{1/2}$

As apparent from the above, the size of the turbulent region is determined by the coefficient Ct. The "m" is a coefficient defined by Curted and Ricon in 1964 together with the Coefficient Ct, and is determined so that the non-dimension parameter H may be modified into the equation (3). The coefficient Ct is a coefficient for determining the size of re-circulation region caused by the flow jet. According to said reference, the turbulent region fills the passage at the Ct = 0.3.

On the other hand, according to the treatise published on ASME paper in 1984 by a company named "Ingersoll-Rand", the flow rate Mr required for re-circulation in an infinitely long tube can be determined as follows:

$$Mr = \int_{BDC}^{SA} (\pi/4)d^2 \times P \times u_e \ (0.32/Ct - 0.43)dt \quad (4)$$

SA: e.g., a certain time
BDC: e.g., a certain time
p: density
$u_e$: velocity in throat
In the equation (4), the coefficient Ct can be simplified as follows:
Ct = [(D/d)² - 1/2]^{-1/2}
Therefore, the value of d/D substantially becomes as follows when the Ct is 0.3.
d/D≒0.3

According to experiments with the engine shown in Figure 1 (having a cylinder diameter of 100 mm or more) when the Ct is 0.3, the fuel consumption f becomes minimum as shown by characteristic X2 in Figure 3.

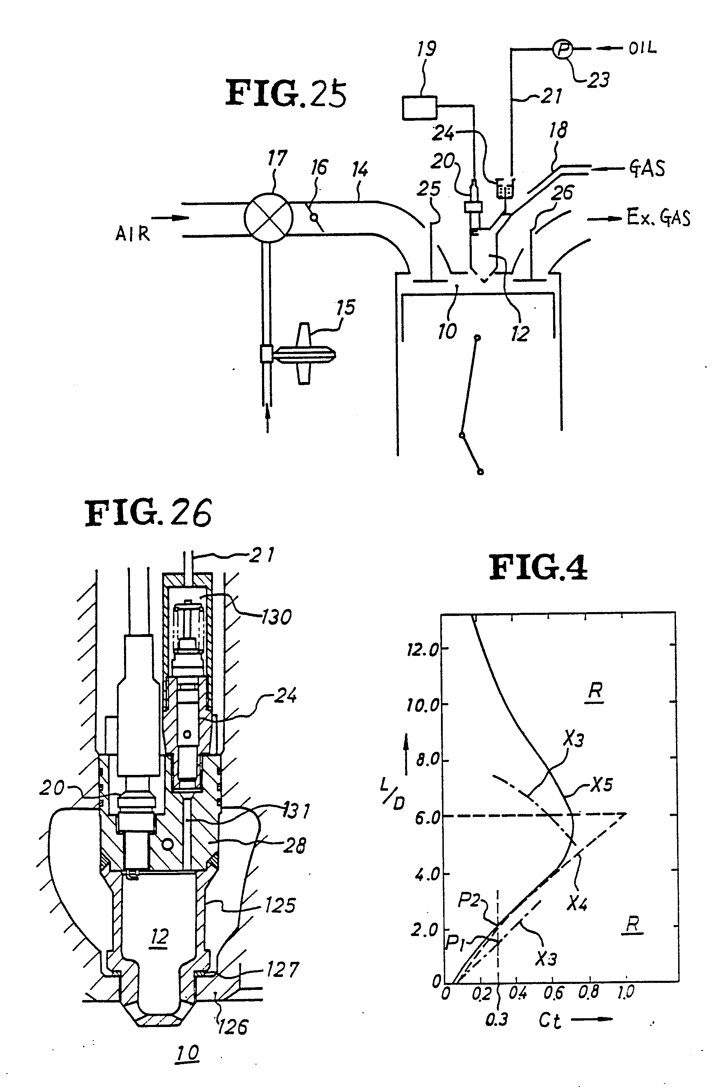

The condition in the equation (2) will now be explained. In connection with the reference "TURBULENT JETS", reference is made to Figure 4 in which L is a length through which the turbulent region is generated by an axially symmetrical passage flow in the cylindrical passage having the diameter of D. There is a turbulent region in a region R of the characteristic X5 derived from the experiment of Hill, the characteristic X4 derived from the experiment of Curtet and Barchilon and characterised X3 derived from the experiment of Becker et al. When the coefficient Ct is 0.3, the turbulent region is generated in a region between L/D = 1.5 at the intersection P1 with characteristic X3 and L/D = 2.0 at the intersection P2 with the characteristic X5. Therefore, good mixture is obtained in the area of L/D = 1.5~2.0. and inferior mixture is formed in other areas.

According to experiments done by the inventors, if the L/D is less than 1.5, inferior mixture is formed, and when L/D is larger than 2.0, it takes too long a time until the flame in the pre-chamber 12 reaches the main chamber 10, resulting in inferior combustion. Therefore, even in large engines having a cylinder diameter of 100 mm or more, good combustion is achieved when the condition defined in equation (2) is fulfilled.

As stated hereinbefore, the gas engine of pre-chamber type according to the invention achieves following effects.

Since the sectional area of the pre-chamber 12 is gradually reduced toward the main chamber, the jet flow flows into the pre-chamber 12 at an appropriate velocity, so that good combustion is obtained in the pre-chamber 12 even in a large engine having the cylinder diameter of 100 mm or more. The reasons thereof are as follows. If the pre-chamber 12 is of cylindrical shape, the jet flows through the throat at an excessively high velocity in high speed medium engines, resulting in blow-off. However, the pre-chamber 12 having said shape has a relatively small capacity, so that the velocity of the flow jet in the throat is low, and thus the blow-off does not occur. It has been confirmed in experiments by the inventors that a good mixture is formed in any pre-chamber 12 having said shape.

With conditions set as follows:
d/D = 0.3     (1)
L/D = 1.5~2.0     (2)
it is impossible to achieve superior formation of lean mixture in the pre-chamber by equation (1) as well as superior combustion and propagation of the flame by equation (2).

A further aspect of the invention is an engine incorporating a check valve as recited in claim 6.

Since pressures in both the main chamber and pre-chamber are balanced through a connecting passage, the check valve body can open rapidly, resulting in good opening characteristics of the valve body.

Since both open ends are apart from each other, the lubricating oil will not mix with the gas, and thus

EP 0 377 265 A1

deposit is reduced.

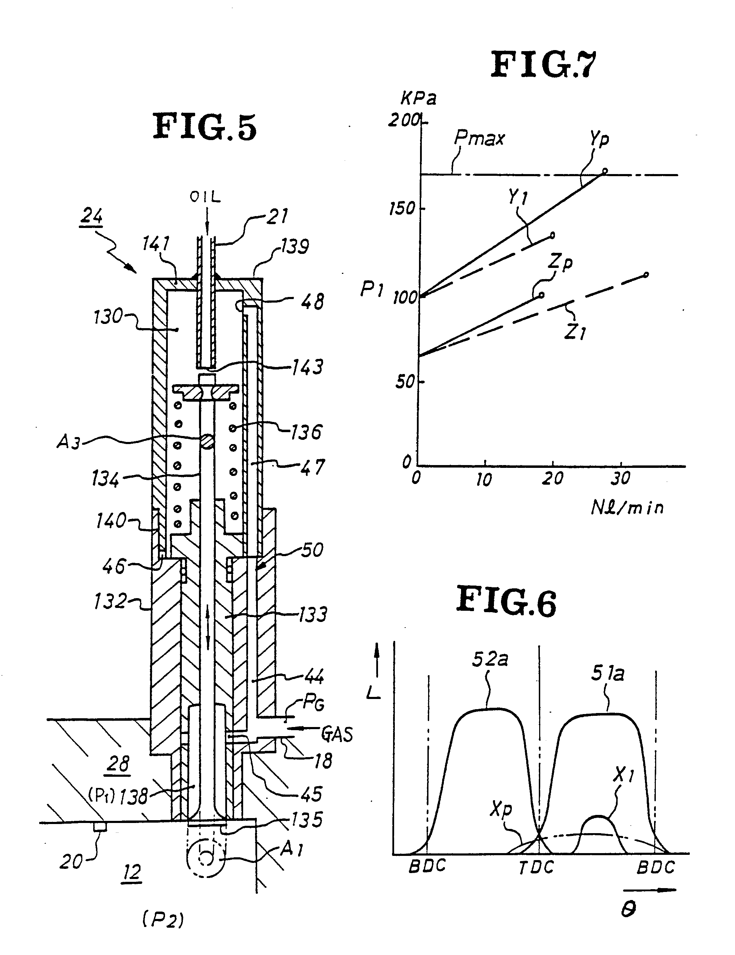

In Figure 5, the check valve 24 includes a valve holder 132 to which a cylindrical cap 139 closed at an upper end wall 141 is screwed through a threaded portion 140. A lubricating oil pipe 21 extends through the wall 141 into the upper space 130. An open end 143 of the pipe 21 is located vertically above a valve stem 134.

The valve holder 132 fitted into the sleeve 28 (Figure 28) has a passage 44, the lower end of which is connected to a lower space 138 through a port 45 in a valve guide 133. The upper end 44 of the passage connects to a passage 47 formed in the wall of the cap 139. The passages 44 and 47 will be connected to each other through an annular groove 46 formed in the lower surface of the cap 139, when the circumferential position of the cap 139 cannot be set to directly connect both passages together. The upper end 48 of the passage 47 opens to the uppermost portion of the chamber 130. These passages 44 to 47 form a connection passage 50. The gas pipe 18 connects to the passage 44.

Thus, the open ends 143 and 48 are located at positions remote from each other, and the oil supplied from the end 143 into the space 130 does not flow through the passage 50 into the lower space 138 and thus the pre-chamber 12.

Operation of the check valve 24 shown in Figure 5 is as follows. The gas pressure P1 in the gas pipe 18 is applied to the lower space 138, so that the valve body 135 receives a valve opening force F expressed in the following equation, in which P2 is the pressure in the pre-chamber 12, and A1 is the area of the valve body 135.

$$F = A1 \times (P1 - P2) \qquad (5)$$

On the other hand, where P3 is the pressure in the upper space 130 of the conventional structure without the connecting passage 50, the pressure P3 is lower than the pressure P1. If the stem 134 has an area of A3, the following force F1 acts to pull up the valve stem 134 in the opening operation.

$$F1 = A3 \times (P3 - P1) \qquad (6)$$

The attractive force F1 caused by the difference between the pressures in the spaces 130 and 138 restrains the opening operation of the valve. However, in Figure 5, since the spaces 130 and 138 are connected through the passage 50, the pressures in the spaces 130 and 138 are balanced, and the pressure P1 is same as the pressure P3.

Therefore, the attractive force F1 does not act in the check valve 24 of Figure 5, which is opened by negative pressure midway of the opening period of the intake valve 25 (Figure 25) as shown in the characteristic X1 (Figure 6), while the intake valve 25 and the exhaust valve 26 operate in accordance with lift characteristics 51a and 52a. Figure 6 is a graph of crank angle against valve lift L. The characteristic X1 shows that the intake valve 25 rapidly opens without loss of the gas, which occurs in conventional structures, in which the differences of the pressures in the spaces 130 and 131 causes a characteristic Xp and opening of the check valve 24 during opening of the exhaust valve 26.

The gas pressure $P_G$ in the gas pipe 18 should be higher than the pressure P2 in the pre-chamber 12. As the flow rate of the gas increases, the pressure P1 in the lower space 138 increases. There is a limit to the pressure $P_G$ of the gas in the gas pipe 18 supplied from mains gas supplies. It is preferable that the pressure P1 in the lower space 138 does not become too high.

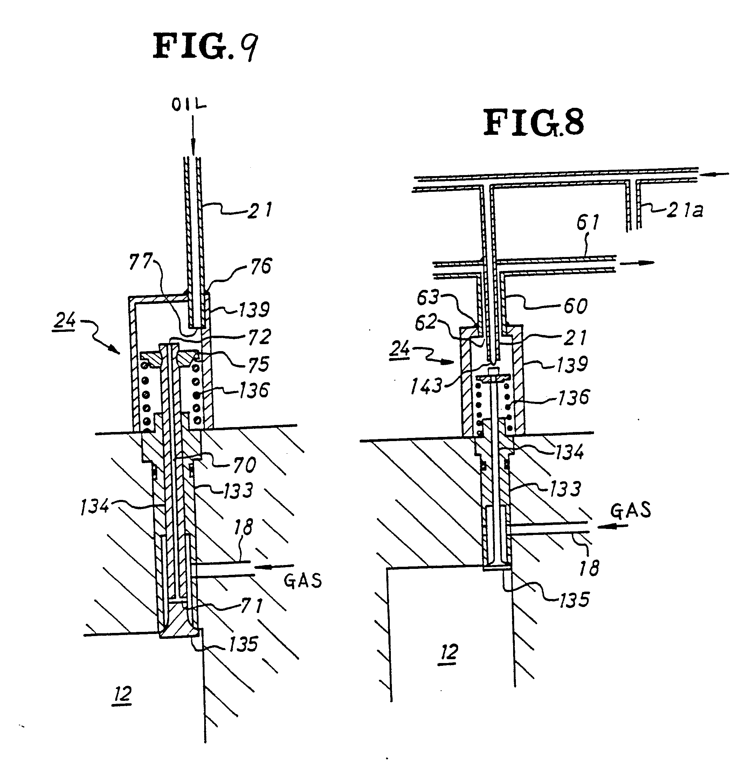

That is, as shown in Figure 7 which is a graph relating to the pressure P1 Kpa ($100KPa = 1Hg/cm^2$), if the passage 50 were not provided, the pressure $P_G$ would reach the maximum value Pmax at the flow rate N of about 25 litre/min. along characteristic Yp, and thus the gas could not be supplied to the pre-chamber 12. When the passage 50 is provided, the characteristic Y1 becomes slower, and further supply to the pre-chamber 12 is possible, Zp is the characteristic when the check valve 24 without the passage 50 operates in atmosphere. Z1 is the characteristic when the passage 50 is provided.

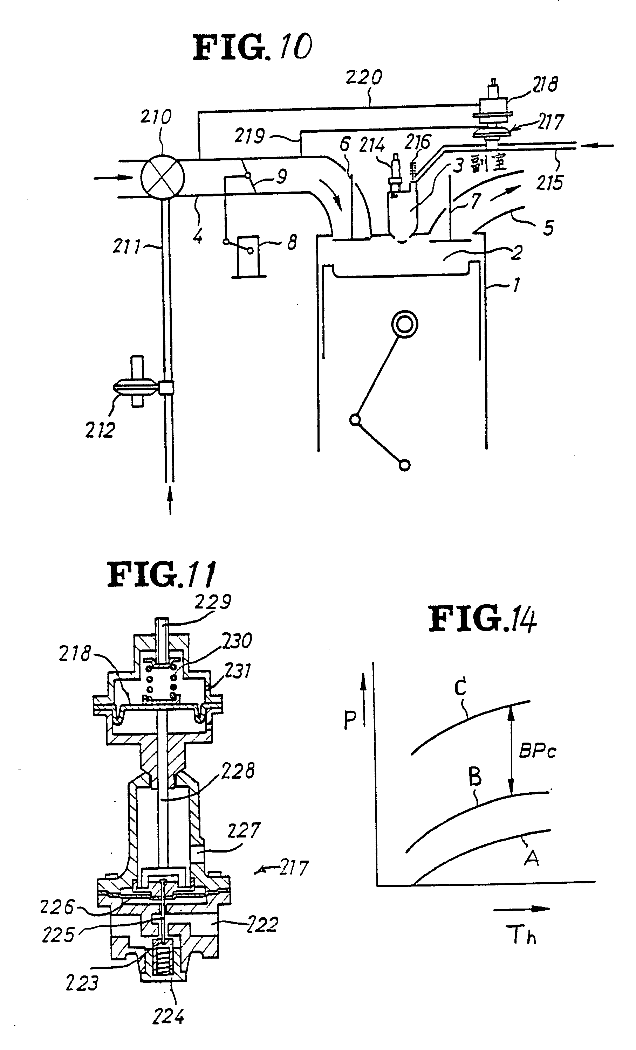

In the second embodiment of the check valve 24, shown in Figure 8, the connecting passage is formed by a pipe 60 surrounding the pipe 21 as well as a main pipe 61 connected to the pipe 18. The open end 62 of the pipe 60 is vertically spaced from the open end 143 and opens to the upper end of the space 130. The pipe 60 is welded to the cap 139 at 63. A lubricating oil pipe 21a is also connected to other cylinders (not shown).

This second embodiment is suited to the case where the cap 139 is thin such that the connecting passage cannot be formed in the wall thereof.

In the third embodiment of the check valve 24, shown in Figure 9, the connection passage is constituted by passages 70 and 71 formed in the valve stem 134 as well as the gas pipe 18. An open end 72 of the passage 70 opens at the upper end of the valve stem 134. The lubricating oil pipe 21 is shifted to one side along an inner surface 75 of the upper space 130 and is welded thereto at 76. Therefore, the oil flows from the open end 77 of the pipe 21 along the inner surface 75 without entering into the open end 72.

This third embodiment can be easily assembled and can be arranged in a narrow space.

7

With a check valve according to the invention (second aspect) the pressures in both the spaces 130 and 138 are balanced through the connection passage 50, 60 or 70 so that the valve body can rapidly open, and thus the opening characteristics of the valve body 35 are improved.

Since the open ends 143, 48, or 143, 62 or 77, 72 are spaced from each other, it is possible to prevent the mixing of the lubricating oil with the gas, and thus the deposit is reduced.

A further aspect of the invention is a method of pressure control for a pre-chamber in a gas engine as recited in claim 11.

A change of intake negative pressure Pa corresponds to a change of load, and a change of boost pressure Pc corresponds to a change of rotation speed. Therefore, gas pressure control can be appropriately performed in accordance with the load and rotation speed of the gas engine by controlling supply pressure Pg in accordance with the equation:

$$Pg = APa + BPc + C$$

Due to the existance of constant C, the gas or the mixture can be supplied even upon start-up of the engine when the intake pressure Pa and the boost pressure Pc are zero.

An embodiment of the gas pressure control method for the pre-chamber according to the third aspect of the invention is described with reference to Figures 10 to 14.

In Figure 10, an engine cylinder 1 has a main chamber 2 and a pre-chamber 3 as well as intake and exhaust pipes 4 and 5 connected to the main chamber 2. Intake and exhaust valves 6 and 7 are associated with the main chamber 2. A throttle 9 driven by a governor 8 is disposed in the intake pipe 4. An inlet of the pipe 4 is connected through a mixer 210 to a gas supply pipe 211 to which a gas regulator 212 is connected.

A spark plug 214 is associated with the pre-chamber 3. A gas supply pipe 215 is connected to the pre-chamber 3 through a check valve 216. The gas supply pipe 215 is provided with a regulator 217, which includes an auxiliary diaphragm 218, and is connected through a negative pressure conduit 219 to a portion of the inlet pipe 4 downstream of the throttle 9, and is also connected through a boost pressure conduit 220 to a portion of the pipe 4 between the throttle 9 and the mixer 210.

The regulator 217 for the pre-chamber includes, as shown in Figure 11, a valve 223 for selectively opening and closing a gas passage 222, a first spring 224 biasing the valve 223 upwardly and a main diaphragm 226 connected to said valve 223 through a first rod 225. The upper surface of the main diaphragm 226 receives an intake negative pressure introduced from the conduit 219 through an inlet 227. The main diaphragm 226 is connected through a second rod 228 to the auxiliary diaphragm 218, which is biased downwardly by a second spring 230. The position of the upper end of the spring 230 is set by an adjustable bolt 229. The upper surface of the diaphragm 218 receives a boost pressure introduced from the conduit 220 through an inlet 231.

Although it is not shown, an intake negative pressure and boost pressure are introduced into the regulator 212 for the main chamber. Further, there is provided a lean burn sensor which detects the concentration of oxygen in the exhaust gas and produces a voltage corresponding to the air/fuel ratio in the chamber 2, as well as a control device which controls the boost pressure introduced into the regulator 212 on the basis of the outputs from the lean burn sensor so that the pressure in the pipe 211 is controlled so as to set the air/fuel ratio of the mixture supplied from the pipe 4 into the chamber 2 at an intended value.

Referring to Figure 12, which illustrates the relationship between the boost pressure Pb and the gas supply pressure Pg to the pre-chamber 3, a combustion region is formed between solid lines D and E. As is apparent, the gas supply pressure should be increased as the load increases.

Referring to Figure 13, which illustrates the relationship between the intake negative pressure Pv and the gas supply pressure Pg to the pre-chamber 3, a combustion region is formed between solid lines F and H. The intake negative pressure corresponds to the opening degree of the throttle, i.e., to the engine speed, and, as is apparent from Figure 13, the gas supply pressure should be increased as the engine speed increases.

In order to decrease the density of $NO_x$ in the exhaust gas, it is necessary to reduce the air/fuel ratio in the main chamber 2. For this purpose, the flow rate of the air should be increased with respect to that of the gas by opening the throttle, whereby the negative pressure in the cylinder 1 is reduced, which may suppress the rapid flow of the gas into the cylinder, so that the gas supply pressure to the pre-chamber 3 should be increased.

In operation the air supplied from a charger (not shown) into the intake pipe 4 is mixed by the mixer 210 with the gas regulated by the regulator 212 to form a lean mixture, and is supplied into the main chamber 2.

The gas in the supply pipe 215 for the pre-chamber is regulated by the regulator 217 and is supplied through the check valve 216 into the pre-chamber 3. The diaphragm 226 in the regulator 217 receives the boost pressure from the inlet 231 and the elastic force of the second spring 230. The force of the diaphragm 226 is balanced against the elastic force of the first spring 224. As the force acting downwardly on the diaphragm 226 becomes large, the valve 223 moves downwardly a longer distance to increase the gas supply pressure.

Thus, if the intake negative pressure is Pa, the boost pressure is Pc, and A, B and C are constants larger than 0, the gas supply pressure Pg to the pre-chamber 3 is regulated by the regulator 217 and may be expressed as stated previously, namely:

$$Pg = APa + BPc + C$$

The constant C is the elastic force of the second spring 230 and other components so that the valve 223 is prevented from completely closing the passage 222 even when the pressures Pa and Pc are zero. The constants A and B are determined by the pressure-receiving area of the diaphragms 226 and 218 and other structural factors in the regulator 217, and are set so that the optimum supply pressure Pg is always obtained with respect to changes of the intake negative pressure Pa and the boost pressure Pc.

Therefore, when the throttle 9 is opened the pressure in the cylinder and the intake negative pressure increase, and thus the gas supply pressure increases. In Figure 14 illustrating the relationship between the opening degree Th of the throttle and the pressure P, the solid line A indicates the inner pressure in the cylinder 1, the solid line B is the intake negative pressure, and the solid line C is the gas supply pressure. It is also apparent from the equation that the gas supply pressure increases even in accordance with the increased boost pressure.

As described above, since the gas supply pressure to the pre-chamber 3 is controlled in accordance with the intake negative pressure and the boost pressure, the gas is supplied to the pre-chamber 3 at the optimum pressure in accordance with the speed and load of the engine, so that the optimum air/fuel ratio is always maintained in the main chamber 2. Therefore, the ideal lean mixture can be formed, the concentration of $No_x$ in the exhaust gas can be suppressed, and it is also possible to prevent stalling of the engine due to the ratio exceeding the lean limit.

Although the pipe 215 usually supplies only gas to the pre-chamber 3, it may be adapted to supply a rich mixture of gas and air.

In the embodiment described above, the mixture ratio of the lean mixture supplied to the main chamber 2 is precisely controlled by the lean burn sensor or similar. The control precision of the air/fuel ratio can also be remarkably improved by the combination of the present invention and other control arrangements.

According to the third aspect of the invention, the gas supply pressure to the pre-chamber changes in accordance with the load and speed of the engine, so that the gas can be supplied to the pre-chamber at the optimum pressure in accordance with the speed and load of the engine, and thus the optimum air/fuel ratio can be maintained in the main chamber. Therefore, the concentration of $NO_x$ in the exhaust gas can be suppressed, and it is possible to prevent stalling of the engine due to the ratio exceeding the lean limit. Due to the existence of the constant C, the gas can be supplied to the pre-chamber even upon start-up of the engine, in which the intake pressure and the boost pressure are zero.

Yet a further aspect of the invention, as recited in claim 13, is a mixture ratio control apparatus for a gas engine, which need not be provided with a pre-chamber. However, this mixture ratio control technique may be applied to a gas engine provided with a pre-chamber.

A control device controls the flow valve for the air to change the degree of opening of a bypass passage, so that the flow rate of the air in the bypass passage changes, and thus the mixture ratio changes. Since the flow rate of the air, which is remarkably large with respect to that of the fuel gas, is controlled to change the air/fuel ratio, the change of the air flow rate does not rapidly change the air/fuel ratio, so that precise control can be performed.

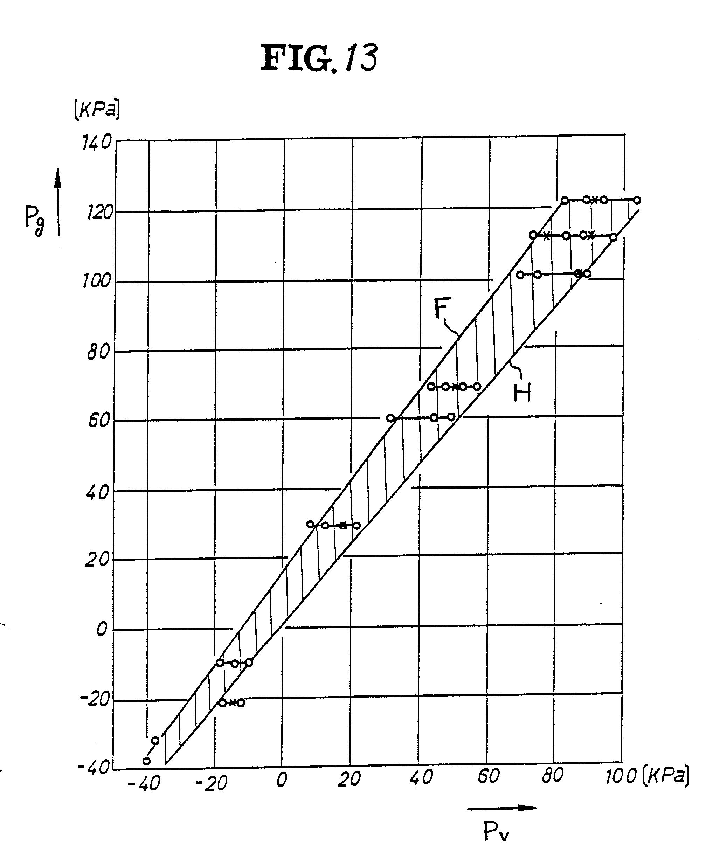

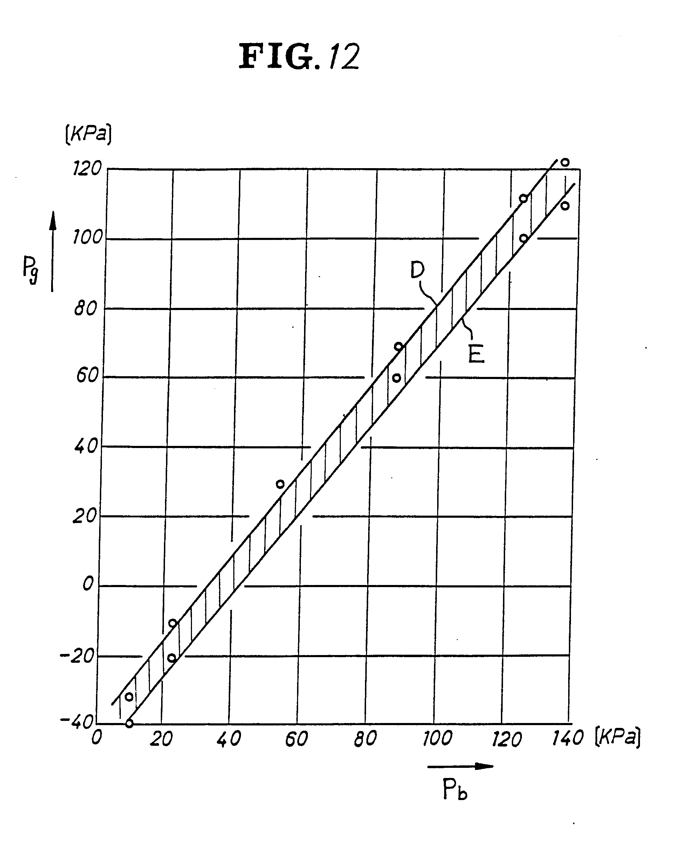

An embodiment of the control apparatus is described with reference to Figures 15 to 20.

Referring to Figure 15, the engine comprises a cylinder 301, a piston 302 and a cylinder head 303, in which a spark plug 304 is arranged. An intake pipe 305 and an exhaust pipe 306 are connected to the cylinder head 303. An intake valve 307 and an exhaust valve 308 are also arranged in the cylinder head 303. A throttle 309 is arranged in the intake pipe 305. The inlet end of the intake pipe 305 is connected to a mixer 310.

The mixer 310 has an inlet connected by way of an air supply passage 312 to an air source (not shown) and another inlet connected by way of a gas supply passage 313 to a gas source (not shown). The passage 313 is provided with a gas regulator 314, to which the pressure in the passage 312 is introduced through a pipe 315. The pressure in the passage 313 downstream of the regulator 314 is also recirculated to the regulator 314 through a pipe 316.

The air passage 312 and the intake pipe 305 are connected through the bypass passage 318 detouring the mixer 310. In the bypass passage 318, there is provided an electrically controlled shut-off valve 319 for selectively opening and closing it, and there is also provided an electrically controlled flow control valve 320 downstream the valve 319 for controlling the degree of opening of the bypass passage 318.

A boost sensor 322 for the intake pipe 305 is located downstream of the throttle 309. This boost sensor 322 functions as a load sensor for detecting the pressure in the intake pipe 305. In the vicinity of a gear 323, which is mounted on a crank shaft of the engine, a rotation speed sensor 324 is arranged to detect the teeth of the gear 322 and thereby produce pulse signals in accordance with the rotation speed of the engine. The exhaust pipe 306 is provided with a lean burn sensor 325 for detecting the density of the residual oxygen in the exhaust gas in the pipe 306. These sensors 322, 324 and 325 are electrically connected to input terminals of a control device 326. Output terminals of the control device 326 are connected to control signal input terminals of solenoids in the shut-off valve 319 and a stepping motor 320a in the control valve 320.

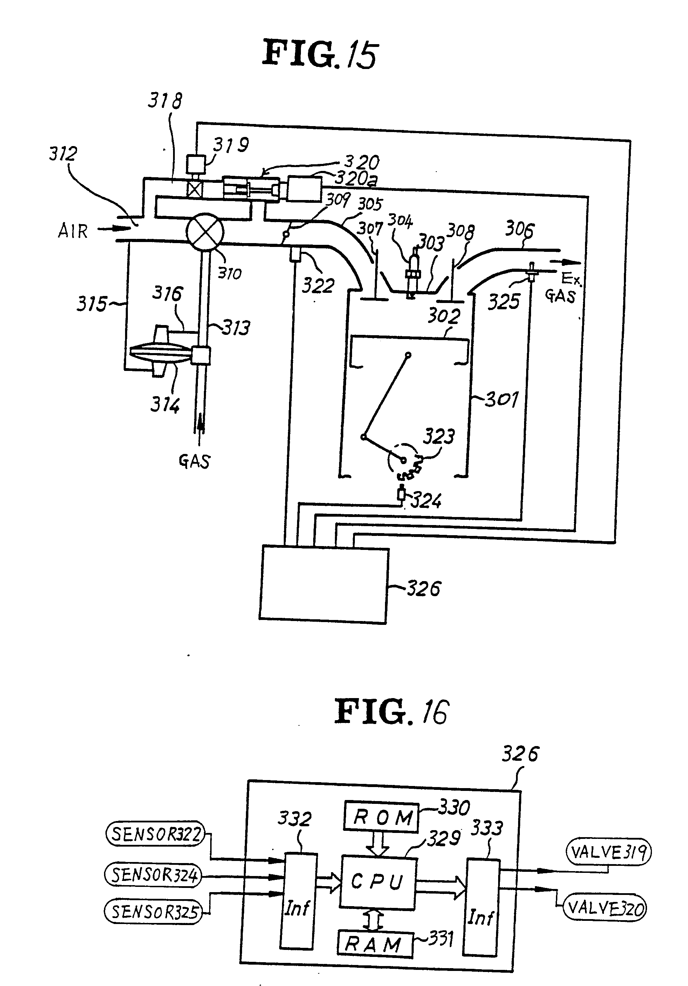

The control device 326 consists of a micro-computer, and includes, as shown in Figure 16, a central processing unit 329 (CPU) for processing the input signals in accodance with a program, ROM 330 (read only memory(s)) and RAM 331 (random access memory(s)) for memorizing data and program, an input interface 332 between the CPU 329 and the sensors 322, 324, 325 and others, and an output interface 33 between the CPU 329 and the valves 319, 320 and others.

In operation the air in the passage 312 and the fuel gas in the passage 313 are mixed by the mixer 310 to form the lean mixture, which is supplied through the intake pipe 305 and the valve 307 into a combustion chamber in the cylinder 301, and is ignited therein by the spark plug 304. The exhaust gas in the combustion chamber is discharged through the valve 308 and the pipe 306 to the charger (not shown). Due to the existence of the mixer 310, the pressure in the air passage 312 is higher than that in the pipe 305, so that the air in the passage 312 is partially supplied through the bypass passage 318 to the inlet pipe 305. The flow rate in the bypass passage 318 is determined by the control valve 320 controlled by the control device 326, so that the flow rate in the inlet pipe 305 can be controlled by the device 326 to achieve the optimum mixture ratio. When it is required to form a rich mixture, e.g., for acceleration of the engine, the control device 326 causes closure of the valve 319 so that air does not flow through the bypass passage 318. Thus the quantity of air supplied to the pipe 305 decreases, resulting in a rich mixture.

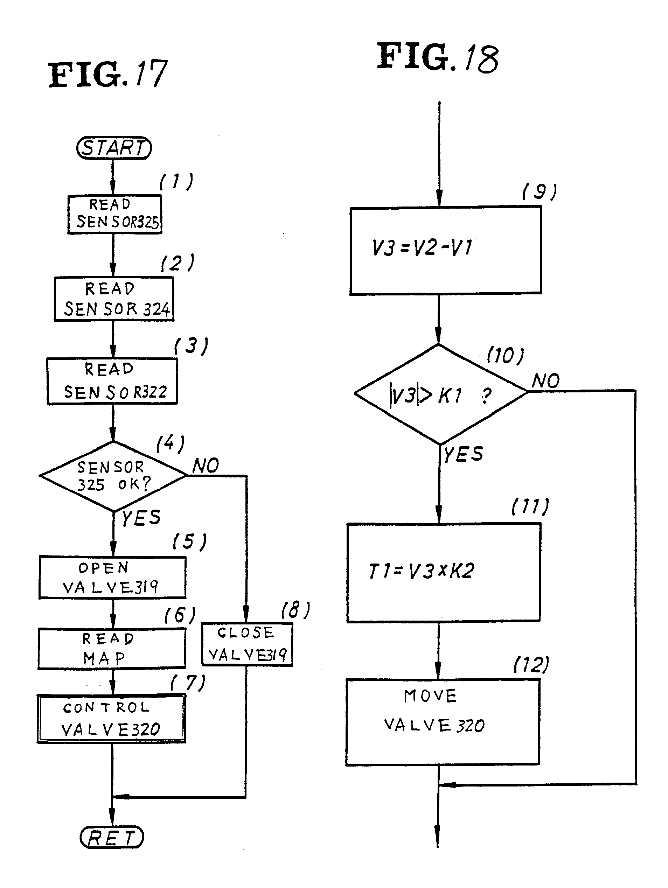

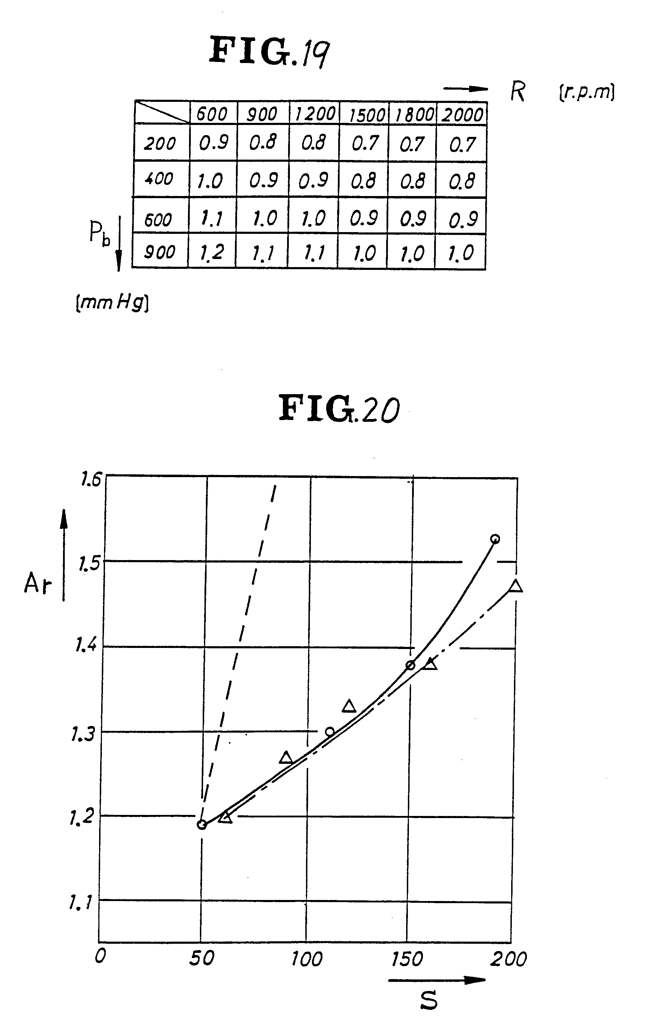

In the above operation, the CPU 329 specifically operates as shown in Figure 17 and 18. At step (1), the CPU 329 reads the value V1 of an output voltage of the lean burn sensor 325 and stores it in the RAM 331. This value corresponds to the present actual mixture ratio. In the subsequent step (2), it counts the output pulses from the speed sensor 324 for a predetermined time and stores the number of them in the RAM 331. This number corresponds to the engine speed (e.g., rpm). In step 3), it reads the output voltage of the boost sensor 322 and stores the boost pressure calculated therefrom in the RAM 331. The boost pressure corresponds to the load of the engine. In the following step (4), it is determined whether the output of the lean burn sensor is normal or not. Since the resistance of the lean burn sensor 325 changes to a large extent when it becomes abnormal, the above determination can be performed based on the output thereof. If it is determined that the sensor 325 is normal, the process moves to the step (5), in which the air shut-off valve 319 is opened by an output signal, which is latched until the subsequent output signal to the valve 319 is produced or the CPU 329 stops. Instead of the control device 326, the valve 319 may have the latching function. In the following step (6), an ideal output voltage value V2 for the lean burn sensor 325 is read from a map memorized in the RAM 331 in accordance with the engine speed and the boost pressure obtained in the steps (2) and (3), respectively. The map in the RAM 331 is illustrated in Figure 19, and the values V2 in the map are converted from the ideal mixture ratios. For example, the value corresponding to the ideal mixture ratio is 0.9V when the engine speed is 600 rpm and the boost pressure is 200 mmHg. The process moves to the step (7) for controlling the stepping motor 320a in the control valve 320, which will be detailed later, and then returns to the step (1). On the other hand, if the output of the lean burn sensor 325 is not normal in step (4), the process jumps to the step (8), in which a signal is supplied to the shut-off valve 319 to close it, and then returns to the step (1). In this case, the air does not flow through the bypass passage 318 and the engine runs with the rich mixture.

The operation in the aforesaid step (7) is detailed with reference to Figure 18. In step (9), the ideal output voltage V2 for the lean burn sensor 325 obtained in the step (7) and the actual output voltage V1 obtained in the step (1) are processed to produce the difference (V3 = V2-V1) therebetween and this is stored in the RAM 331. In the following step (10), it is determined whether the value V3 is larger than a constant value K1 memorized in the RAM 331. If larger, the process moves to the step (11), in which the value V3 is multiplied by a constant value K2 memorized in the RAM 331, and the product T1 = V3 x K2 is written in the RAM 331. Then, in step (12), the stepping motor 320a in the flow valve 320 is controlled to operate in accordance with said product T1. Thus, the product T1 is a number of the steps for actuating the motor and can be either positive or negative for actuating it in opposite directions. The flow rate of the air in the bypass passage 318 is controlled by the degree of opening of the flow valve 320 which corresponds to the rotation angle of the motor 320a, whereby the mixture ratio is controlled. As stated above, the number of steps, i.e., the product T1, for the motor is proportional to the difference V3 between the ideal and actual values V2 and V1. When the difference V3, and thus the product T are large, the degree of opening of the valve 320 changes to a large extent to obtain the actual mixture ratio. The constant value K2 is determined to control the ratio as stated above. The control device 326 controls the flow valve 320 to set the mixture ratio at the optimum value in accordance with the load and speed of the engine, as stated above. On the other hand, in the step (10), if the absolute value of V3 is not more than the constant value K1, the motor 320a is not driven and the process returns to the step (1). That is, if the actual mixture ratio is very close to the optimum value, it is determined to be in an acceptable range, and thus the opening degree of the valve 320 is not changed to effectively prevent hunting.

Since the mixture ratio is controlled by controlling the flow rate of the air, very precise control can be performed, in comparison with the case that the fuel gas is controlled, as shown at alternate long and short dash line in Figure 20 illustrating relationship between the number S of the steps and the excess air rate Ar. Therefore, lean combustion can be effectively performed at the optimum ratio in accordance with the load and speed of the engine, without exceeding the combustion limit. Thus, both an improvement in fuel consumption and a reduction of nitrogen oxides in the exhaust gas can be achieved. In Figure 20, the solid line and alternate long and short dash line illustrate the results according to the above embodiment at 1500 rpm and 1800 rpm, respectively. The dash line illustrates the result of the embodiment in Figure 11 at 1800 rpm. As is seen therefrom, when the mixture control device of this embodiment is employed, the air excess rate Ar slowly changes in accordance with the change of the degree of opening of the valve 320, and thus precise control can be achieved. It is preferable to provide the shut-off valve 319 in the bypass passage 318, as is employed in the embodiment, to instantaneously make the mixture ratio rich in cases of acceleration and other relevant cases.

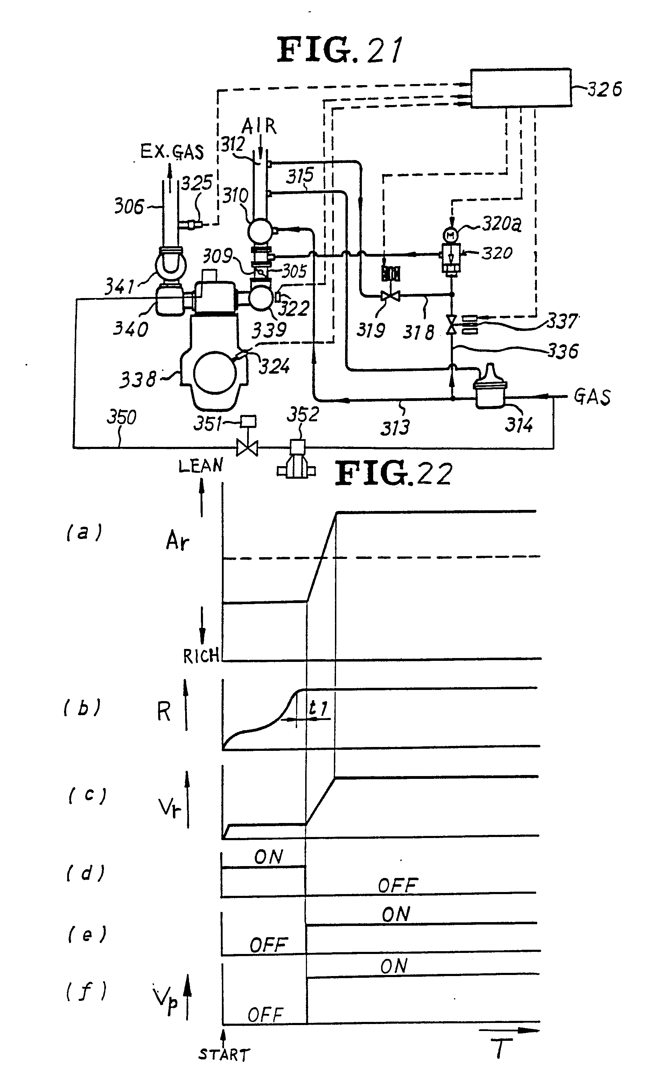

Another embodiment is shown in Figure 21 wherein elements the same as those in Figure 15 bear same reference numbers, and are not detailed again here. In this embodiment, a gas passage 336 branched from the gas supply passage 313 is connected to a portion of the bypass passage 318 between the valves 319 and 320. The branch passage 336 is provided with a shut-off valve 337 which is electrically controlled by the control device 326. Between the gas supply pipe 313 and the pre-0chamber of an engine body 338, there is arranged a pipe 350 which is provided with a shut-off valve 351 and a gas pressure control device 352. Other components of the arrangement include an intake manifold 339, an exhaust manifold 340 and a charger 341.

Operation of this embodiment is described with reference to Figure 22 in which

    (a) illustrates a mixture ratio Ar,

    (b) illustrates rotation speed R of the engine,

    (c) illustrates opening degree Vr of the air flow control valve 320,

    (d) illustrates opening and closing of the air shut-off valve 337,

    (e) illustrates opening and closing operation of the gas supply valve 351.

The abscissa is time T from start-up of the engine.

In (a), the dash line illustrates the mixture ratio in a case where the air or the fuel gas does not flow through the bypass passage 318, i.e., the mixture ratio set in the mixer 310. Upon start-up of the engine, the control device 326 opens the air shut-off valve 319 and closes the gas shut-off valve 337, so that a part of the fuel gas in the bypass passage 313 flows through the branch passage 336 and the bypass passage 318 to the intake pipe 305 without flowing through the mixer 310, and thus the mixture ratio becomes rich, resulting in good ignitability as well as good acceleration of the engine. In the operational condition the control device 326 controls the valve 320 to achieve the optimum mixture ratio for good ignitability.

When a predetermined time t1 passes after the engine reaches the rated speed, the control device 326 opens the valve 319 and closes the valve 337, as is done in the embodiment in Figure 15, and simultaneously opens the supply valve 351 to supply gas to the pre-chamber so as to perform optimum control of the air/fuel ratio.

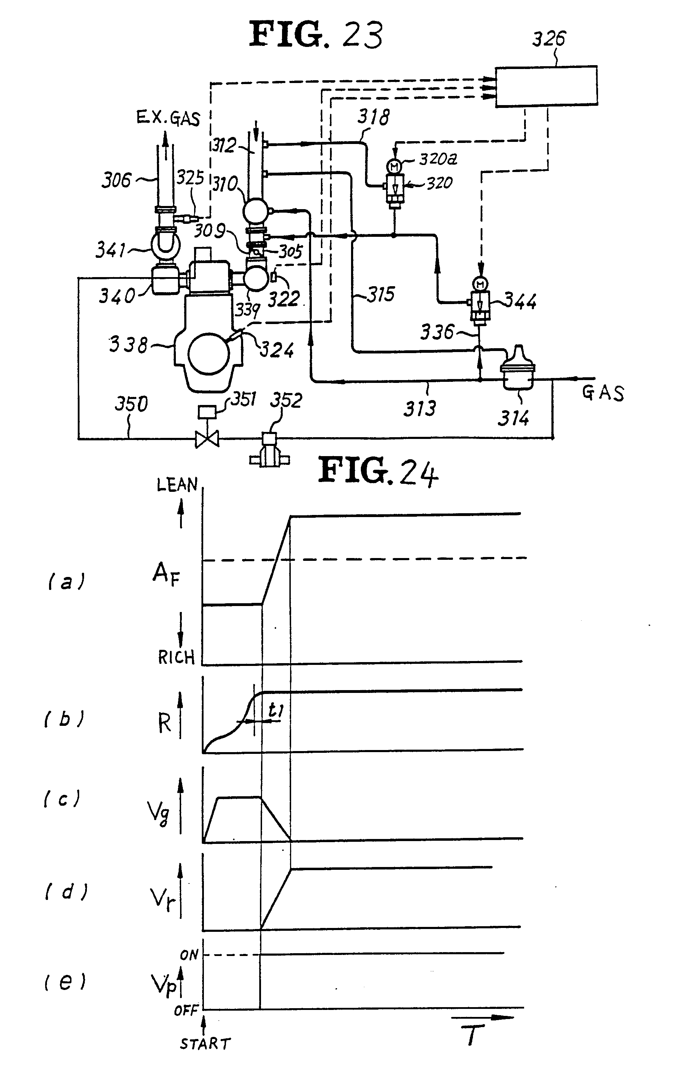

Referring to Figure 23 illustrating another embodiment, the gas passage 336 branched from the gas supply passage 313 is connected to a portion of the bypass passage 318 downstream of the valve 320. The branch passage 336 is provided with a flow control valve 344 which is electrically controlled by the control device 326. An air shut-off valve corresponding to the valve 319 in Figure 21 is not provided. However, there is a pipe 350 which is provided with a shut-off valve 351 and a gas pressure control device 352.

Operation of this embodiment is described with reference to Figure 24 in which

    (a) illustrates a mixture ratio AF,

    (b) illustrates rotation speed R of the engine,

11

(c) illustrates opening degree Vr of the gas flow control valve 344,

(d) illustrates opening and closing of the air flow control valve 320, and

(e) illustrates opening degree Vp of the gas shut-off valve 351.

The abscissa is time T from start-up of the engine.

In (a), the dash line illustrates the mixture ratio in a case where the air or the fuel gas does not flow through the bypass passage 318, i.e., the mixture ratio set in the mixer 310. Upon start-up of the engine, the control device 326 completely closes the air flow control valve 320 and controls the opening degree of the gas flow control valve 344, so that a part of the fuel gas in the passage 313 flows through the branch passage 336 and the bypass passage 318 to the intake pipe 305 without flowing through the mixer 310, and thus the mixture ratio becomes rich, resulting in good ignitability as well as good acceleration of the engine. In this operational condition, the control device 326 controls the valve 344 to achieve the optimum mixture ratio for good ignitability. When a predetermined time t1 passes after the engine reaches the rated speed, the control device 326 completely closes gas flow control valve 344 and controls the opening degree of the air flow control valve 320 to control the mixture ratio, as is done in the embodiment in Figure 15. Simultaneously it opens the supply valve 351 to supply the gas to the pre-chamber. Thus, similar advantages to those in the previously described embodiments can be obtained.

As described, the arrangements revealed in Figures 21 and 23 can improve the startability of the engine.

In the above embodiment, although the engine is provided with a charger 341, the invention may be applied to engines without chargers.

Sensors other than the boost sensor 322 may be employed as the load sensor.

Various motors other than the stepping motor 320a can be used and various electromagnetic devices may be used in the flow control valve 320 for changing the degree of opening thereof.

## Claims

1. A gas engine in which a pre-combustion chamber (12) is arranged in communication with a main combustion chamber (10), an intake passage (14) is arranged to supply lean mixture to the main chamber (10), a gas pipe (18) is provided to supply fuel gas to the pre-chamber to form a rich mixture there, and a spark plug (20) is adapted to ignite the rich mixture in the main chamber, characterised in that at least a portion (42) of the pre-chamber (12) has a cross-sectional area which gradually decreases toward the main combustion chamber (10).

2. A gas engine according to claim 1 wherein d/Dd is approximately 0.3 and L/D is between 1.5 and 2.0, L being the length of the pre-chamber (12), and D and d being maximum and minimum diameters of the pre-chamber (12), respectively.

3. A gas engine according to claim 1 or 2 wherein the pre-chamber (12) has a cylindrical inner surface (41) of a predetermined length at an end portion remote from the main combustion chamber (10), and a tapered surface (42) adjoining this cylindrical surface.

4. A gas engine according to claim 1 or 2 wherein the inner surface of the pre-chamber (12) is entirely formed by a tapered surface converging toward the main combustion chamber (10).

5. A gas engine according to any of claims 1 to 4 wherein the main combustion chamber (10) has a diameter of 100 mm or more.

6. A gas engine having a pre-combustion chamber (12) and having a passage (18) for supplying fuel gas to the pre-chamber (12) provided with a check valve (24) adapted to be opened by negative pressure in the pre-chamber (12), characterised in that the check valve (24) comprises valve guide means (133,132) connecting to the pre-chamber (12), a closed cylindrical cap (139) at the upper end of the valve guide means (133,132), a valve stem (134) slidably fitted into the valve guide means (133), and a valve body (135) integral with the valve stem, and in that a connecting passage (50;60;70) is provided for connecting a lower space (138) in the valve guide means (133), which connects to the pre-chamber (12) only when the valve body (135) opens, to an upper space (130) in the cap (139), the end (48,67,72) of the connecting passage (50,60,70) which opens into the upper space (130) being spaced from an end (143,77) of a lubricating oil pipe (21) which also opens to the upper space (130) to supply lubricating oil thereto.

7. A gas engine having a check valve according to claim 6 wherein the connecting passage (50) is formed by a longitudinal passage (44) extending in a wall of the valve guide means (132) in the longitudinal direction thereof, an aperture (45) in the valve guide means (133) connecting an end of the longitudinal passage (44) to the lower space (138), and a passage (47) extending in the longitudinal direction of the cap (139) from the other end of the aforesaid longitudinal passage and opening into the upper end of the upper space (130).

8. A gas engine having a check valve according to claim 6, wherein the upper end (48,62) of the connecting passage (50;60) opens to the upper end of the upper space (130), and the lubricating oil pipe (21) penetrates the upper wall of the cap (139) and extends therethrough to a vertically middle position in the upper space (130) in the vicinity of the upper end of the valve stem (134).

9. A gas engine having a check valve according to claim 6 wherein the gas pipe (18) for supplying fuel gas is connected to the lower space (138), the lubricating oil pipe (21) penetrates the upper wall of the cap (139) and extends to a vertically middle position in the upper space (130) in the vicinity of the upper end of the valve stem (134), the lubricating oil pipe (21) is surrounded by an outer pipe (60) which opens (at 62) at the upper inner surface of the pre-chamber (12), and the outer pipe (60) is connected to the gas pipe (18).

10. A gas engine having a valve according to claim 6 wherein the gas pipe (18) for supplying fuel gas is connected to the lower space (138), the connecting passage (70) between the upper and lower spaces (130,138) is formed in the valve stem (134), and the lubricating oil pipe (21) penetrating an upper wall of the cap (139) is offset from the upper end (72) of the connecting passage (70).

11. A method of controlling gas pressure in a pre-combustion chamber (3) of a gas engine, in which gas or air/gas mixture to be supplied to the pre-chamber (3) is controlled at a supply pressure Pg expressed in the following equation:

$Pg = APa + BPc + C$,

Pa being an intake negative pressure, Pc being a boost pressure, and A, B and C being constants above 0.

12. A gas engine having a pre-combustion chamber (3) and having a gas pressure control arrangement for carrying out the method claimed in claim 11, said arrangement comprising a regulator (217) for controlling gas pressure provided in a gas supply pipe (215) for the pre-chamber (3), said regulator (217) including a valve (223) adapted to selectively open and close a gas passage (222), a first spring member (224) biasing said valve (223) in a closing direction, a main diaphragm (226) connected to the valve (223) through a first rod (225), an auxiliary diaphragm (218) connected to the main diaphragm (226) through a second rod (228), a second spring (230) biasing the auxiliary diaphragm (226) in a direction for opening the valve (223), and a bolt (229) for setting a spring load connected to the second spring (230), an intake negative pressure being introduced to the main diaphragm (226) so as to act in a closing direction of the valve (223), and a boost pressure being introduced to the auxiliary diaphragm (218) so as to act in the opening direction of the valve (223).

13. Mixture ratio control arrangement for a gas engine provided with a mixer (310) for mixing air supplied through an air supply passage (312) and fuel gas supplied through a gas supply passage (313) so as to supply lean mixture to an intake pipe (305), said control arrangement comprising a bypass passage (318) connecting the air supply passage (312) to the intake pipe (305) without passing through the mixer (310), an air flow control valve (320) for adjusting the degree of opening of the bypass passage (318), a load sensor (324) for detecting the load of the engine, a rotation speed sensor (322) for detecting the load of the engine, a lean burn sensor (325) for detecting residual oxygen density in exhaust gas of the engine, and a control device (326) for controlling the air flow control valve (320) in accordance with detected output from the aforesaid sensors so that the mixture ratio is optimally controlled in accordance with the load and speed of the engine.

14. Control apparatus according to claim 13 wherein the bypass passage (318) is provided with an air shut-off valve (319) controlled by the control device (326) and located upstream of the air flow control valve (320), and includes a portion between said two valves (319,320) to which a branch gas passage (336) branched from the gas supply passage (313) is connected, and the branch gas passage is provided with a gas shut-off valve (327) controlled by said control device (326) whereby a rich mixture may be obtained.

15. Control apparatus according to claim 13 wherein the bypass passage (318) includes a portion downstream the air flow control valve (320) to which a gas branch passage (336) branched from the gas supply pipe (313) in connected, and the gas branch passage (336) is provided with a gas flow control valve (344) controlled by the control device (326) for controlling the degree of opening of the gas branch passage (336) whereby a rich mixture may be obtained.

# FIG.1

# FIG.2

# FIG.27

OIL

21

134
130
139
136
133
138
132
GAS
18
135
137
131

## FIG.2

$X1$

$f\,(MJ/kwh)$

$V\,(m/s)$ →

200    100    0

11

10.5

10

## FIG.3

$X2$

$f\,(MJ/KWh)$

$C_t$ →

1.0    0.5    0.3    0

11

10.5

10

**FIG.25**

AIR →

**FIG.26**

10

**FIG.4**

# FIG.5

OIL

24

141    21    139

130    48

143

A3    136

47

134

140

46    50

132    133

44

PG

GAS

28

18

(P1) 138    45

20    135

12    A1

(P2)

# FIG.7

KPa
200
Pmax    Yp
150    Y1
Zp
P1 100    Z1
50
0
0    10    20    30
Nℓ/min

# FIG.6

L

52a    51a

Xp    X1

BDC    TDC    BDC

θ

# FIG.9

# FIG.8

**FIG.** *10*

**FIG.** *11*

**FIG.** *14*

# FIG. 13

FIG.12

# FIG. 15

# FIG. 16

# FIG.17

START

(1) READ SENSOR325

(2) READ SENSOR 324

(3) READ SENSOR322

(4) SENSOR 325 ok? —NO→

YES

(5) OPEN VALVE319

(6) READ MAP

(8) CLOSE VALVE319

(7) CONTROL VALVE320

RET

# FIG.18

(9) V3 = V2 - V1

(10) |V3| > K1 ? —NO→

YES

(11) T1 = V3 × K2

(12) MOVE VALVE 320

## FIG.19

| | 600 | 900 | 1200 | 1500 | 1800 | 2000 |
|---|---|---|---|---|---|---|
| 200 | 0.9 | 0.8 | 0.8 | 0.7 | 0.7 | 0.7 |
| 400 | 1.0 | 0.9 | 0.9 | 0.8 | 0.8 | 0.8 |
| 600 | 1.1 | 1.0 | 1.0 | 0.9 | 0.9 | 0.9 |
| 900 | 1.2 | 1.1 | 1.1 | 1.0 | 1.0 | 1.0 |

$R$ [r.p.m]

$P_b$

[mm Hg]

## FIG.20

# FIG. 21

# FIG. 22

# FIG. 23

EX.GAS

*326*

*318*

*312*

*306* *325* *310*

*320a*

*320*

*341* *309*

*305*

*340* *339* *322*

*315*

*344*

*336*

*338* *324*

*350* *351* *352*

*313* *314*

GAS

# FIG. 24

LEAN
↑

( a ) $A_F$

↓
RICH

( b ) $R$ ↑ *t1*

( c ) $V_g$ ↑

( d ) $V_r$ ↑

ON

( e ) $V_p$ ↑

OFF

START

$T$

# FIG.28

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-4 638 777 (FANNER)<br>* Column 2, line 44 - column 3, line 22, line 61 - column 4, line 2 * | 1 | F 02 B 19/10<br>F 02 M 21/02<br>F 02 D 19/02 |
| Y | US-A-2 914 041 (FROEHLICH)<br>* Column 2, lines 28-57; column 3, lines 14-20,50-56; figure 2 * | 1 | |
| A | | 3 | |
| Y | US-A-4 091 772 (HEATER)<br>* Column 1, lines 7-14; column 3, line 57 - column 4, line 20; figure 2 * | 1 | |
| A | | 3 | |
| A | US-A-4 146 005 (WIMMER)<br>* Column 1, lines 9-20, line 57 - column 2, line 8, line 65 - column 3, line 3; column 4, lines 1-10; figure 4 * | 1-3 | **TECHNICAL FIELDS SEARCHED (Int. Cl.4)**<br><br>F 02 B |

| Place of search | Date of completion of the search | Examiner |
|---|---|---|
| THE HAGUE | 06-09-1989 | LEFEBVRE |

European Patent -
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid.

namely claims:

☐ No claims fees have been paid within the prescribed time limit. The present European search report has been drawn up for the first ten claims.

## X | LACK OF UNITY OF INVENTION

The Search Division considers that the present European patent application does not comply with the requirement of unity of invention and relates to several inventions or groups of inventions.

namely:

1. Claims 1-5: Gas engine pre-combustion chamber

2. Claims 6-10: Check valve for a gas engine

3. Claims 11,12: Method of pressure control for a pre-combustion chamber in a gas engine

4. Claims 13-15: Mixture ratio control arrangement for a gas engine

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid.

namely claims:

☒ None of the further search fees has been paid within the fixed time limit. The present European search report has been drawn up for those parts of the European patent application which relate to the invention first mentioned in the claims.

namely claims:    1-5